# EUROPEAN PATENT APPLICATION

(11) **EP 2 829 449 A1**
(43) Date of publication of application: **28.01.2015**
(21) Application number: 12871718.8
(22) Date of filing: 21.03.2012
(51) Int. Cl.: B60W 10/08, B60K 6/445, B60W 20/00

(54) **DRIVE CONTROL DEVICE FOR HYBRID VEHICLE**

(71) Applicant: TOYOTA JIDOSHA KABUSHIKI KAISHA, Toyota-shi, Aichi-ken, 471-8571 (JP)
(72) Inventor: MARUYAMA, Tomoyuki, Toyota-shi, Aichi-ken, 471-8571 (JP); ONO, Tomohito, Toyota-shi, Aichi-ken, 471-8571 (JP)
(74) Representative: Kuhnen & Wacker
(86) International application number: PCT/JP2012/057159
(87) International publication number: WO 2013/140546

(57) **Abstract**

The purpose of the present invention is to provide a drive control device whereby the occurrence of torque loss when the engine is started during electric motor travel in a hybrid vehicle is suppressed. The output torque of a second electric motor (MG2) is increased, a clutch (CL) is released, and the engine (12) is rotationally driven by a first electric motor (MG1), when the engine (12) is started during electric motor travel in an electric motor travel mode (EV-2) during which the vehicle is driven using the first electric motor (MG1) and the second electric motor (MG2). As a result, the reduction in the vehicle drive torque corresponding to the reduction in the output torque of the first electric motor (MG1) contributing to the vehicle drive force is compensated by the increase in drive torque corresponding to the increase in the output torque of the second electric motor (MG2), thereby mitigating change in the vehicle drive torque and suppressing the occurrence of torque loss.

## Description

### TECHNICAL FIELD

The present invention relates to an improvement of a drive control device for a hybrid vehicle.

### BACKGROUND ART

There is known a hybrid vehicle which is provided with a differential mechanism having a first rotary element connected to a first electric motor, a second rotary element connected to an engine, and a third rotary element connected to an output rotary member and a second electric motor, and a crankshaft locking device for inhibiting a rotary motion of a crankshaft of the engine, and which can be run in a second motor drive mode in which both of the first and second electric motors are operated as a vehicle drive power source, as well as in an ordinary first motor drive mode in which the second electric motor is operated as the vehicle drive power source.

### PRIOR ART DOCUMENT

### Patent Document

Patent Document 1: JP-2008-265600 A1

### SUMMARY OF THE INVENTION

### Object Achieved By The Invention

It is considered to configure a hybrid vehicle such that the hybrid vehicle is provided with: a first differential mechanism having a first rotary element connected to a first electric motor, a second rotary element connected to an engine, and a third rotary element connected to an output rotary member; a second differential mechanism which has a first rotary element connected to a second electric motor, a second rotary element and a third rotary element, and in which one of the second and third rotary elements is connected to the third rotary element of the first differential mechanism; a clutch for selectively connecting the rotary element of the first differential mechanism and the rotary element of the second differential mechanism to each other; and a brake for selectively fixing the rotary element of the second differential mechanism to a stationary member. This hybrid vehicle can be run in a motor drive mode in which the first and second electric motors are operated to drive the hybrid vehicle while the brake and the clutch are placed in an engaged state.

Further, the hybrid vehicle configured as described above can be run in a hybrid drive mode in which the engine and the first electric motor and/or the second electric motor are operated as a vehicle drive power source while the brake is placed in the engaged state while the clutch is placed in a released state. In this hybrid drive mode, the hybrid vehicle can be run with a further increased drive force.

By the way, during running of the above-described hybrid vehicle in the motor drive mode in which the first and second electric motors are operated in the engaged state of the brake and the clutch, the engine may be required to be started as a result of an increase of a required vehicle drive force, or for the purpose of increasing an electric energy amount SOC stored in an electric-energy storage device, for instance. However, the above-described hybrid vehicle is not provided with an exclusive engine starter motor, so that the first electric motor must be used to start the engine. The use of this first electric motor results in a decrease of the vehicle drive force by an amount corresponding to a portion of torque of the first electric motor consumed for starting the engine, giving rise to a problem of a so-called "drive torque drop", which is felt uneasy by passengers of the hybrid vehicle.

The present invention was made in view of the background art described above. It is therefore an object of the present invention to provide a drive control device for the above-described hybrid vehicle, which permits prevention of the drive torque drop upon starting of the engine during running of the hybrid vehicle in the motor drive mode in which the first and second electric motors are operated to drive the hybrid vehicle.

### Means For Achieving The Object

The object indicated above is achieved according to the principle of the present invention, which provides a drive control device for a hybrid vehicle provided with: (a) a first differential mechanism and a second differential mechanism which have four rotary elements as a whole; (b) an engine, a first electric motor, a second electric motor and an output rotary member which are respectively connected to the above-described four rotary elements; and (c) a brake configured to selectively fix the rotary element connected to the engine, to a stationary member, and (d) wherein one of the above-described four rotary elements is constituted by the rotary element of the above-described first differential mechanism and the rotary element of the above-described second differential mechanism which are selectively connected to each other through a clutch, and (e) the hybrid vehicle has a motor drive mode in which the first electric motor and the second electric motor are operated to drive the hybrid vehicle while the above-described brake and the above-described clutch are placed in an engaged state, (f) the drive control device being characterized by bringing said clutch into a released state for permitting the above-described first electric motor to cause a rotary motion of the above-described engine, upon starting of the above-described engine in the above-described motor drive mode, and controlling the above-described second electric motor so as to increase its output torque.

### Advantages Of The Invention

According to the drive control device for the hybrid vehicle according to the present invention, the second electric motor is controlled to increase its output torque, and the clutch is brought into a released state for permitting the first electric motor to cause a rotary motion of the engine, upon starting of the engine during running of the hybrid vehicle in the motor drive mode in which the first electric motor and the second electric motor are operated to drive the hybrid vehicle. Accordingly, a decrease of vehicle drive torque corresponding to a portion of an output torque of the first electric motor, which portion has been used to drive the hybrid vehicle, is compensated for by an increase of the vehicle drive torque caused by an increase of the output torque of the second electric motor, so that an amount of change of the vehicle drive torque is reduced to prevent the drive torque drop.

According to one preferred form of the invention, (g) the above-described second electric motor is operated in the above-indicated motor drive mode, at an operating point within a second rated torque which is smaller by a predetermined margin value than a first rated torque which is predetermined to be relatively large, and operated during the starting of the above-described engine, at an operating point at which the output torque of the second electric motor is larger than the above-described second rated torque. According to this form of the invention, the hybrid vehicle can be run in the motor drive mode in a steady state without overheating, and the second electric motor can be temporarily operated during the starting of the engine, so as to generate a torque larger than the second rated torque that is a permissible maximum torque value in the motor drive mode, so that the drive torque drop during the starting of the engine is prevented with a higher degree of stability.

According to another preferred form of the invention, (h) each of the above-described first and second electric motors is operated in the above-indicated motor drive mode, at an operating point in a region of relatively high efficiency, and operated during the starting of the above-described engine, at an operating point which is outside the above-indicated region of relatively high efficiency and at which the output torque is larger than the above-indicated second rated torque. According to this form of the invention, the hybrid vehicle can be run in the motor drive mode with a high degree of operating efficiency of the electric motor, and the second electric motor can be temporarily operated during the starting of the engine, so as to generate a torque larger than the second rated torque that is the permissible maximum torque value in the motor drive mode, so that the drive torque drop during the starting of the engine is prevented with a higher degree of stability.

According to a further preferred form of the invention, (j) the above-described second electric motor is operated in the above-indicated motor drive mode, at an operating point at which the output torque of the second electric motor is larger than a second rated torque, where there is a low probability of a requirement for starting the engine. According to this form of the invention, the second electric motor is operated at the operating point at which the output torque is larger than the second rated torque, so that a further increased vehicle drive force can be obtained in the motor drive mode, where the probability of the requirement for the engine starting is low, as in the case where the hybrid vehicle is running in a steady state without an operation of a vehicle operator for rapid acceleration or abrupt braking of the vehicle, where cooling water and oil temperatures of the engine are higher than predetermined warm-up limit values, or where an electric-energy storage device is in an almost fully charged state with its stored electric energy amount SOC being close to a predetermined upper limit.

According to a still further preferred form of the invention, (k) the above-described first differential mechanism has a first rotary element connected to the above-described first electric motor, a second rotary element connected to the above-described engine, and a third rotary element connected to the above-described output rotary member, (l) while the above-described second differential mechanism has a first rotary element connected to the second electric motor, a second rotary element, and a third rotary element, one of the above-described second and third rotary elements being connected to the third rotary element of the above-described first differential mechanism, and wherein (m) the above-described clutch is configured to selectively connect the rotary element of the above-described first differential mechanism and the rotary element of the above-described second differential mechanism to each other, (n) while the above-described brake is configured to selectively fix the rotary element of the above-described second differential mechanism to the stationary member.

### BRIEF DESCRIPTION OF THE DRAWINGS

Fig. 1 is a schematic view for explaining an arrangement of a hybrid vehicle drive system to which the present invention is suitably applicable;
Fig. 2 is a view for explaining major portions of a control system provided to control the drive system of Fig. 1;
Fig. 3 is a table indicating combinations of operating states of a clutch and a brake, which correspond to respective five drive modes of the drive system of Fig. 1;
Fig. 4 is a collinear chart having straight lines which permit indication thereon of relative rotating speeds of various rotary elements of the drive system of Fig. 1, the collinear chart corresponding to the EV-1 mode and the HV-1 mode of Fig. 3;
Fig. 5 is a collinear chart having straight lines which permit indication thereon of relative rotating speeds of various rotary elements of the drive system of Fig. 1, the collinear chart corresponding to the EV-2 mode of Fig. 3;
Fig. 6 is a collinear chart having straight lines which permit indication thereon of relative rotating speeds of various rotary elements of the drive system of Fig. 1, the collinear chart corresponding to the HV-2 mode of Fig. 3;
Fig. 7 is a collinear chart having straight lines which permit indication thereon of relative rotating speeds of various rotary elements of the drive system of Fig. 1, the collinear chart corresponding to the HV-3 mode of Fig. 3;
Fig. 8 is a functional block diagram for explaining major control functions of an electronic control device of Fig. 2;
Fig. 9 is a collinear chart for explaining a control operation performed by an engine starting control portion of Fig. 8, the collinear chart indicating a non-operated state of an engine;
Fig. 10 is a view for explaining an operating point of a second electric motor, together with its first and second rated torque values;
Fig. 11 is a flow chart for explaining a major portion of an engine starting control implemented by the electronic control device of Fig. 2 in the EV-2 mode;
Fig. 12 is a flow chart for explaining a control of the second electric motor implemented by the electronic control device of Fig. 2 in the case where there is no probability of requirement for engine starting in the EV-2 mode;
Fig. 13 is a schematic view for explaining an arrangement of a hybrid vehicle drive system according to another preferred embodiment of this invention;
Fig. 14 is a schematic view for explaining an arrangement of a hybrid vehicle drive system according to a further preferred embodiment of this invention;
Fig. 15 is a schematic view for explaining an arrangement of a hybrid vehicle drive system according to a still further preferred embodiment of this invention;
Fig. 16 is a schematic view for explaining an arrangement of a hybrid vehicle drive system according to a yet further preferred embodiment of this invention;
Fig. 17 is a schematic view for explaining an arrangement of a hybrid vehicle drive system according to still another preferred embodiment of this invention;
Fig. 18 is a schematic view for explaining an arrangement of a hybrid vehicle drive system according to yet another preferred embodiment of this invention;
Fig. 19 is a collinear chart for explaining an arrangement and an operation of a hybrid vehicle drive system according to another preferred embodiment of this invention;
Fig. 20 is a collinear chart for explaining an arrangement and an operation of a hybrid vehicle drive system according to a further preferred embodiment of this invention; and
Fig. 21 is a collinear chart for explaining an arrangement and an operation of a hybrid vehicle drive system according to a still further preferred embodiment of this invention.

### MODE FOR CARRYING OUT THE INVENTION

According to the present invention, the first and second differential mechanisms as a whole have four rotary elements while the above-described clutch is placed in the engaged state. In one preferred form of the present invention, the first and second differential mechanisms as a whole have four rotary elements while a plurality of clutches, each of which is provided between the rotary elements of the first and second differential mechanisms and which includes the above-described clutch, are placed in their engaged states. In other words, the present invention is suitably applicable to a drive control device for a hybrid vehicle which is provided with the first and second differential mechanisms represented as the four rotary elements indicated in a collinear chart, and the engine, the first electric motor, the second electric motor and the output rotary member which are connected to the respective four rotary elements, and wherein one of the four rotary elements is selectively connected through the above-described clutch to another of the rotary elements of the first differential mechanism and another of the rotary elements of the second differential mechanism, while the rotary element of the first or second differential mechanism to be selectively connected to the above-indicated one rotary element through the clutch is selectively fixed through the above-described brake to the stationary member.

In another preferred form of the present invention, the above-described clutch and brake are hydraulically operated coupling devices operating states (engaged and released states) of which are controlled according to a hydraulic pressure. While wet multiple-disc type frictional coupling devices are preferably used as the clutch and brake, meshing type coupling devices, namely, so-called dog clutches (claw clutches) may also be used. Alternatively, the clutch and brake may be electromagnetic clutches, magnetic powder clutches and any other clutches the operating states of which are controlled (which are engaged and released) according to electric commands.

The drive system to which the present invention is applicable is placed in a selected one of a plurality of drive modes, depending upon the operating states of the above-described clutch and brake. Preferably, EV drive modes in which at least one of the above-described first and second electric motors is used as a vehicle drive power source while the engine is held at rest include a mode 1 to be established in the engaged state of the brake and in the released state of the clutch, and a mode 2 to be established in the engaged states of both of the clutch and brake. Further, hybrid drive modes in which the above-described engine is operated while the above-described first and second electric motors are operated to generate a vehicle drive force and/or an electric energy as needed, include a mode 3 to be established in the engaged state of the brake and in the released state of the clutch, a mode 4 to be established in the released state of the brake and the engaged state of the clutch, and a mode 5 to be established in the released states of both of the brake and clutch.

In a further preferred form of the invention, the rotary elements of the above-described first differential mechanism, and the rotary elements of the above-described second differential mechanism are arranged as seen in the collinear charts, in the engaged state of the above-described clutch and in the released state of the above-described brake, in the order of the first rotary element of the first differential mechanism, the first rotary element of the second differential mechanism, the second rotary element of the first differential mechanism, the second rotary element of the second differential mechanism, the third rotary element of the first differential mechanism, and the third rotary element of the second differential mechanism, where the rotating speeds of the second rotary elements and the third rotary elements of the first and second differential mechanisms are indicated in mutually overlapping states in the collinear charts.

Referring to the drawings, preferred embodiments of the present invention will be described in detail. It is to be understood that the drawings referred to below do not necessarily accurately represent ratios of dimensions of various elements.

### FIRST EMBODIMENT

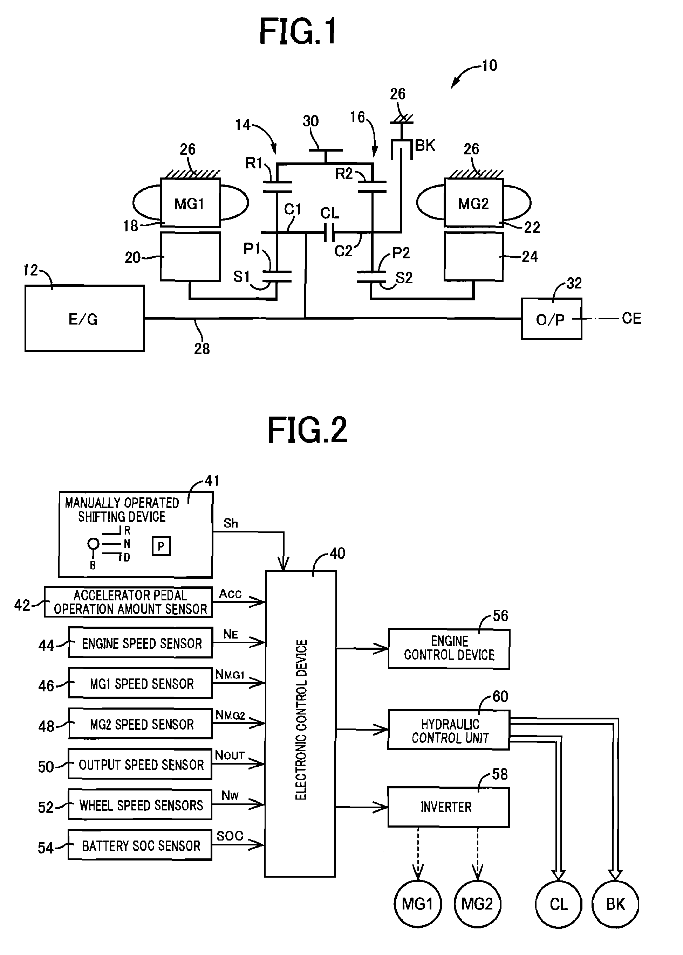

Fig. 1 is the schematic view for explaining an arrangement of a hybrid vehicle drive system 10 (hereinafter referred to simply as a "drive system 10") to which the present invention is suitably applicable. As shown in Fig. 1, the drive system 10 according to the present embodiment is of a transversely installed type suitably used for an FF (front-engine front-drive) type vehicle, and is provided with a main vehicle drive power source in the form of an engine 12, a first electric motor MG1, a second electric motor MG2, a first differential mechanism in the form of a first planetary gear set 14, and a second differential mechanism in the form of a second planetary gear set 16, which are disposed on a common center axis CE. The drive system 10 is constructed substantially symmetrically with respect to the center axis CE. In Fig. 1, a lower half of the drive system 10 is not shown. This description applies to other embodiments which will be described.

The engine 12 is an internal combustion engine such as a gasoline engine, which is operable to generate a drive force by combustion of a fuel such as a gasoline injected into its cylinders. Each of the first electric motor MG1 and second electric motor MG2 is a so-called motor/generator having a function of a motor operable to generate a drive force, and a function of an electric generator operable to generate a reaction force, and is provided with a stator 18, 22 fixed to a stationary member in the form of a housing (casing) 26, and a rotor 20, 24 disposed radially inwardly of the stator 18, 22.

The first planetary gear set 14 is a single-pinion type planetary gear set which has a gear ratio ρ1 and which is provided with rotary elements (elements) consisting of: a first rotary element in the form of a sun gear S1; a second rotary element in the form of a carrier C1 supporting a pinion gear P1 such that the pinion gear P1 is rotatable about its axis and the axis of the planetary gear set; and a third rotary element in the form of a ring gear R1 meshing with the sun gear S1 through the pinion gear P1. The second planetary gear set 16 is a single-pinion type planetary gear set which has a gear ratio p2 and which is provided with rotary elements (elements) consisting of: a first rotary element in the form of a sun gear S2; a second rotary element in the form of a carrier C2 supporting a pinion gear P2 such that the pinion gear P2 is rotatable about its axis and the axis of the planetary gear set; and a third rotary element in the form of a ring gear R2 meshing with the sun gear S2 through the pinion gear P2.

The sun gear S1 of the first planetary gear set 14 is connected to the rotor 20 of the first electric motor MG1. The carrier C1 of the first planetary gear set 14 is connected to an input shaft 28 which is rotated integrally with a crankshaft of the engine 12. This input shaft 28 is rotated about the center axis CE. In the following description, the direction of extension of this center axis CE will be referred to as an "axial direction", unless otherwise specified. The ring gear R1 of the first planetary gear set 14 is connected to an output rotary member in the form of an output gear 30, and to the ring gear R2 of the second planetary gear set 16. The sun gear S2 of the second planetary gear set 16 is connected to the rotor 24 of the second electric motor MG2.

The drive force received by the output gear 30 is transmitted to a pair of left and right drive wheels (not shown) through a differential gear device not shown and axles not shown. On the other hand, a torque received by the drive wheels from a roadway surface on which the vehicle is running is transmitted (input) to the output gear 30 through the differential gear device and axles, and to the drive system 10. A mechanical oil pump 32, which is a vane pump, for instance, is connected to one of opposite end portions of the input shaft 28, which one end portion is remote from the engine 12. The oil pump 32 is operated by the engine 12, to generate a hydraulic pressure to be applied to a hydraulic control unit 60, etc. which will be described. An electrically operated oil pump which is operated with an electric energy may be provided in addition to the oil pump 32.

Between the carrier C1 of the first planetary gear set 14 and the carrier C2 of the second planetary gear set 16, there is disposed a clutch CL which is configured to selectively couple these carriers C1 and C2 to each other (to selectively connect the carriers C1 and C2 to each other or disconnect the carriers C1 and C2 from each other). Between the carrier C2 of the second planetary gear set 16 and the stationary member in the form of the housing 26, there is disposed a brake BK which is configured to selectively couple (fix) the carrier C2 to the housing 26. Each of these clutch CL and brake BK is a hydraulically operated coupling device the operating state of which is controlled (which is engaged and released) according to the hydraulic pressure applied thereto from the hydraulic control unit 60. While wet multiple-disc type frictional coupling devices are preferably used as the clutch CL and brake BK, meshing type coupling devices, namely, so-called dog clutches (claw clutches) may also be used. Alternatively, the clutch CL and brake BK may be electromagnetic clutches, magnetic powder clutches and any other clutches the operating states of which are controlled (which are engaged and released) according to electric commands generated from an electronic control device 40.

As shown in Fig. 1, the drive system 10 is configured such that the first planetary gear set 14 and second planetary gear set 16 are disposed coaxially with the input shaft 28 (disposed on the center axis CE), and opposed to each other in the axial direction of the center axis CE. Namely, the first planetary gear set 14 is disposed on one side of the second planetary gear set 16 on a side of the engine 12, in the axial direction of the center axis CE. The first electric motor MG1 is disposed on one side of the first planetary gear set 14 on the side of the engine 12, in the axial direction of the center axis CE. The second electric motor MG1 is disposed on one side of the second planetary gear set 16 which is remote from the engine 12, in the axial direction of the center axis CE. Namely, the first electric motor MG1 and second electric motor MG2 are opposed to each other in the axial direction of the center axis CE, such that the first planetary gear set 14 and second planetary gear set 16 are interposed between the first electric motor MG1 and second electric motor MG2. That is, the drive system 10 is configured such that the first electric motor MG1, first planetary gear set 14, clutch CL, second planetary gear set 16, brake BK and second electric motor MG2 are disposed coaxially with each other, in the order of description from the side of the engine 12, in the axial direction of the center axis CE.

Fig. 2 is the view for explaining major portions of a control system provided to control the drive system 10. The electronic control device 40 shown in Fig. 2 is a so-called microcomputer which incorporates a CPU, a ROM, a RAM and an input-output interface and which is operable to perform signal processing operations according to programs stored in the ROM while utilizing a temporary data storage function of the RAM, to implement various drive controls of the drive system 10, such as a drive control of the engine 12 and hybrid drive controls of the first electric motor MG1 and second electric motor MG2. In the present embodiment, the electronic control device 40 corresponds to a drive control device for a hybrid vehicle having the drive system 10. The electronic control device 40 may be constituted by mutually independent control units as needed for respective controls such as an output control of the engine 12 and drive controls of the first electric motor MG1 and second electric motor MG2.

As indicated in Fig. 2, the electronic control device 40 is configured to receive various signals from sensors and switches provided in the drive system 10. Namely, the electronic control device 40 receives: a shift position signal Sh generated by a manually operated shifting device 41, which is indicative of a presently selected one of a parking position, a neutral position, a forward drive position, a reverse drive position, etc.; an output signal of an accelerator pedal operation amount sensor 42 indicative of an operation amount or angle A_{CC} of an accelerator pedal (not shown), which corresponds to a vehicle output required by a vehicle operator; an output signal of an engine speed sensor 44 indicative of an engine speed N_{E}, that is, an operating speed of the engine 12; an output signal of an MG1 speed sensor 46 indicative of an operating speed N_{MG1} of the first electric motor MG1; an output signal of an MG2 speed sensor 48 indicative of an operating speed N_{MG2} of the second electric motor MG2; an output signal of an output speed sensor 50 indicative of a rotating speed N_{OUT} of the output gear 30, which corresponds to a running speed V of the vehicle; an output signal of wheel speed sensors 52 indicative of rotating speeds N_{W} of wheels in the drive system 10; and an output signal of a battery SOC sensor 54 indicative of a stored electric energy amount (state of charge) SOC of a battery not shown.

The electronic control device 40 is also configured to generate various control commands to be applied to various portions of the drive system 10. Namely, the electronic control device 40 applies to an engine control device 56 for controlling an output of the engine 12, following engine output control commands for controlling the output of the engine 12, which commands include: a fuel injection amount control signal to control an amount of injection of a fuel by a fuel injecting device into an intake pipe; an ignition control signal to control a timing of ignition of the engine 12 by an igniting device; and an electronic throttle valve drive control signal to control a throttle actuator for controlling an opening angle θ_{TH} of an electronic throttle valve. Further, the electronic control device 40 applies command signals to an inverter 58, for controlling operations of the first electric motor MG1 and second electric motor MG2, so that the first and second electric motors MG1 and MG2 are operated with electric energies supplied thereto from a battery through the inverter 58 according to the command signals to control outputs (output torques) of the electric motors MG1 and MG2. Electric energies generated by the first and second electric motors MG1 and MG2 are supplied to and stored in the battery through the inverter 58. Further, the electronic control device 40 applies command signals for controlling the operating states of the clutch CL and brake BK, to linear solenoid valves and other electromagnetic control valves provided in the hydraulic control unit 60, so that hydraulic pressures generated by those electromagnetic control valves are controlled to control the operating states of the clutch CL and brake BK.

An operating state of the drive system 10 is controlled through the first electric motor MG1 and second electric motor MG2, such that the drive system 10 functions as an electrically controlled differential portion whose difference of input and output speeds is controllable. For example, an electric energy generated by the first electric motor MG1 is supplied to the battery or the second electric motor MG2 through the inverter 58. Namely, a major portion of the drive force of the engine 12 is mechanically transmitted to the output gear 30, while the remaining portion of the drive force is consumed by the first electric motor MG1 operating as the electric generator, and converted into the electric energy, which is supplied to the second electric motor MG2 through the inverter 58, so that the second electric motor MG2 is operated to generate a drive force to be transmitted to the output gear 30. Components associated with the generation of the electric energy and the consumption of the generated electric energy by the second electric motor MG2 constitute an electric path through which a portion of the drive force of the engine 12 is converted into an electric energy which is converted into a mechanical energy.

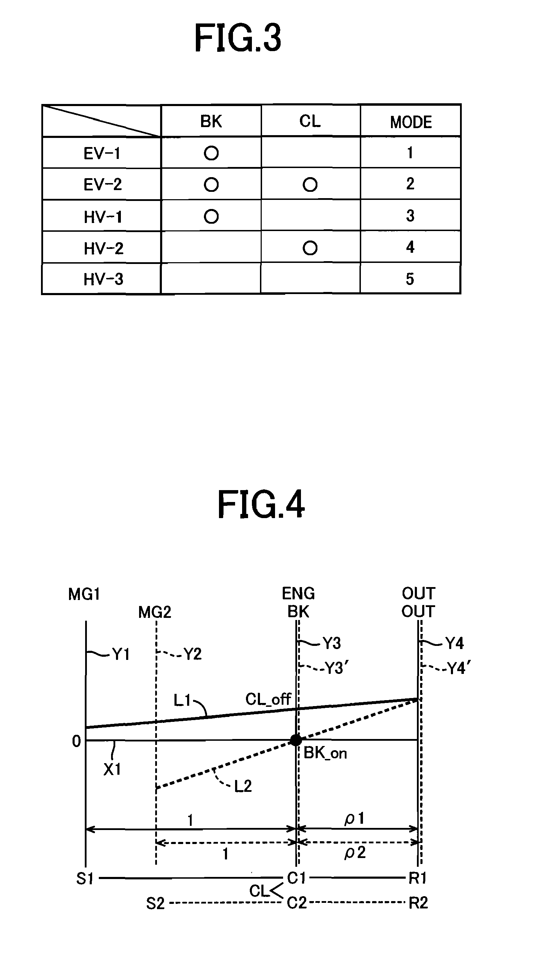

In the hybrid vehicle provided with the drive system 10 constructed as described above, one of a plurality of drive modes is selectively established according to the operating states of the engine 12, first electric motor MG1 and second electric motor MG2, and the operating states of the clutch CL and brake BK. Fig. 3 is the table indicating combinations of the operating states of the clutch CL and brake BK, which correspond to the respective five drive modes of the drive system 10. In this table, "o" marks represent an engaged state while blanks represent a released state. The EV-1 drive mode and EV-2 drive mode indicated in Fig. 3 are motor drive modes in which the engine 12 is held at rest while at least one of the first electric motor MG1 and second electric motor MG2 is used as a vehicle drive power source. The HV-1 drive mode, HV-2 drive mode and HV-3 drive mode are engine drive modes in which the engine 12 is operated as the vehicle drive power source while the first electric motor MG1 and second electric motor MG2 are operated as needed to generate a vehicle drive force and/or an electric energy. In these engine drive modes, at least one of the first electric motor MG1 and second electric motor MG2 is operated to generate a reaction force or placed in a non-loaded free state.

As is apparent from Fig. 3, EV drive modes of the drive system 10 in which the engine 12 is held at rest while at least one of the first electric motor MG1 and second electric motor MG2 is used as the vehicle drive power source consist of: a drive mode 1 in the form of the EV-1 drive mode which is established in the engaged state of the brake BK and in the released state of the clutch CL; and a drive mode 2 in the form of the EV-2 drive mode which is established in the engaged states of both of the brake BK and clutch CL. The engine drive modes in which the engine 12 is operated as the vehicle drive power source while the first electric motor MG1 and second electric motor MG2 are operated as needed to generate a vehicle drive force and/or an electric energy, consist of: a drive mode 3 in the form of the HV-1 drive mode which is established in the engaged state of the brake BK and in the released state of the clutch CL; a drive mode 4 in the form of the HV-2 drive mode which is established in the released state of the brake BK and in the engaged state of the clutch CL; and a drive mode 5 in the form of the HV-3 drive mode which is established in the released states of both of the brake BK and clutch CL.

Figs. 4-7 are the collinear charts having straight lines which permit indication thereon of relative rotating speeds of the various rotary elements of the drive system 10 (first planetary gear set 14 and second planetary gear set 16), which rotary elements are connected to each other in different manners corresponding to respective combinations of the operating states of the clutch CL and brake BK. These collinear charts are defined in a two-dimensional coordinate system having a horizontal axis along which relative gear ratios p of the first and second planetary gear sets 14 and 16 are taken, and a vertical axis along which the relative rotating speeds are taken. The collinear charts indicate the relative rotating speeds when the output gear 30 is rotated in the positive direction to drive the hybrid vehicle in the forward direction. A horizontal line X1 represents the rotating speed of zero, while vertical lines Y1 through Y4 arranged in the order of description in the rightward direction represent the respective relative rotating speeds of the sun gear S1, sun gear S2, carrier C1 and ring gear R1. Namely, a solid line Y1 represents the relative rotating speed of the sun gear S1 of the first planetary gear set 14 (operating speed of the first electric motor MG1), a broken line Y2 represents the relative rotating speed of the sun gear S2 of the second planetary gear set 16 (operating speed of the second electric motor MG2), a solid line Y3 represents the relative rotating speed of the carrier C1 of the first planetary gear set 14 (operating speed of the engine 12), a broken line Y3' represents the relative rotating speed of the carrier C2 of the second planetary gear set 16, a solid line Y4 represents the relative rotating speed of the ring gear R1 of the first planetary gear set 14 (rotating speed of the output gear 30), and a broken line Y4' represents the relative rotating speed of the ring gear R2 of the second planetary gear set 16. In Figs. 4-7, the vertical lines Y3 and Y3' are superimposed on each other, while the vertical lines Y4 and Y4' are superimposed on each other. Since the ring gears R1 and R2 are fixed to each other, the relative rotating speeds of the ring gears R1 and R2 represented by the vertical lines Y4 and Y4' are equal to each other.

In Figs. 4-7, a solid line L1 represents the relative rotating speeds of the three rotary elements of the first planetary gear set 14, while a broken line L2 represents the relative rotating speeds of the three rotary elements of the second planetary gear set 16. Distances between the vertical lines Y1-Y4 (Y2-Y4') are determined by the gear ratios ρ1 and p2 of the first and second planetary gear sets 14 and 16. Described more specifically, regarding the vertical lines Y1, Y3 and Y4 corresponding to the respective three rotary elements in the form of the sun gear S1, carrier C1 and ring gear R1 of the first planetary gear set 14, a distance between the vertical lines Y1 and Y3 corresponds to "1", while a distance between the vertical lines Y3 and Y4 corresponds to the gear ratio "ρ1". Regarding the vertical lines Y2, Y3' and Y4' corresponding to the respective three rotary elements in the form of the sun gear S2, carrier C2 and ring gear R2 of the second planetary gear set 16, a distance between the vertical lines Y2 and Y3' corresponds to "1", while a distance between the vertical lines Y3' and Y4' corresponds to the gear ratio "p2". In the drive system 10, the gear ratio p2 of the second planetary gear set 16 is higher than the gear ratio ρ1 of the first planetary gear set 14 (p2 > ρ1). The drive modes of the drive system 10 will be described by reference to Figs. 4-7.

The EV-1 drive mode indicated in Fig. 3 corresponds to a first motor drive mode of the drive system 10, which is preferably the motor drive mode in which the engine 12 is held at rest while the second electric motor MG2 is used as the vehicle drive power source. Fig. 4 is the collinear chart corresponding to the EV-1 drive mode. Described by reference to this collinear chart, the carrier C1 of the first planetary gear set 14 and the carrier C2 of the second planetary gear set 16 are rotatable relative to each other in the released state of the clutch CL. In the engaged state of the brake BK, the carrier C2 of the second planetary gear set 16 is coupled (fixed) to the stationary member in the form of the housing 26, so that the rotating speed of the carrier C2 is held zero. In this EV-1 drive mode, the rotating direction of the sun gear S2 and the rotating direction in the second planetary gear set 16 are opposite to each other, so that when the second electric motor MG2 is operated to generate a negative torque (acting in the negative direction), the ring gear R2, that is, the output gear 30 is rotated in the positive direction by the generated negative torque. Namely, the hybrid vehicle provided with the drive system 10 is driven in the forward direction when the negative torque is generated by the second electric motor MG2. In this case, the first electric motor MG1 is preferably held in a free state. In this EV-1 drive mode, the clutches C1 and C2 are permitted to be rotated relative to each other, so that the hybrid vehicle can be driven in forward and backward directions in the EV drive mode using the second electric motor MG2 similar to an EV (electric) drive mode which is established in a vehicle provided with a so-called "THS" (Toyota Hybrid System) and in which the clutch C2 is fixed to the stationary member.

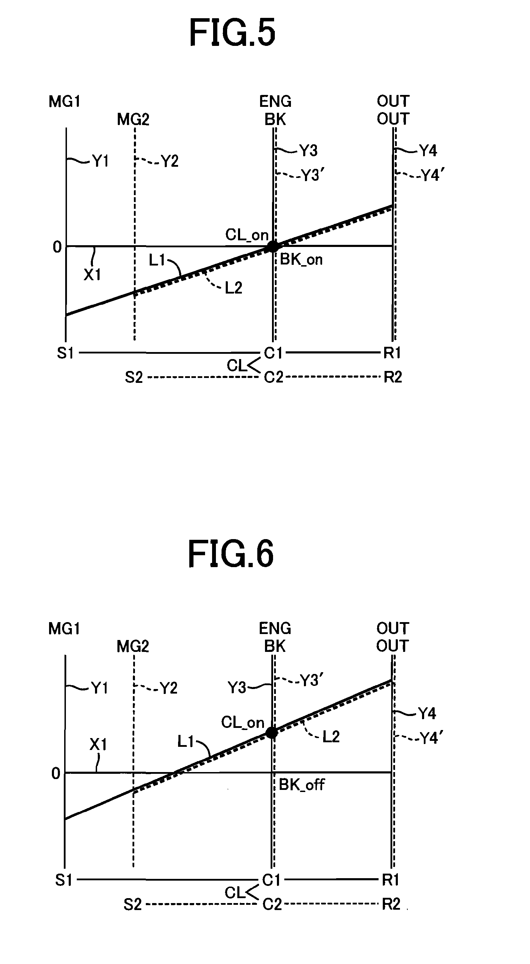

The EV-2 drive mode indicated in Fig. 3 corresponds to a second motor drive mode of the drive system 10, which is preferably the EV drive mode in which the engine 12 is held at rest while at least one of the first electric motor MG1 and second electric motor MG2 is used as the vehicle drive power source. Fig. 5 is the collinear chart corresponding to the EV-2 drive mode. Described by reference to this collinear chart, the carrier C1 of the first planetary gear set 14 and the carrier C2 of the second planetary gear set 16 are not rotatable relative to each other in the engaged state of the clutch CL. Further, in the engaged state of the brake BK, the carrier C2 of the second planetary gear set 16 and the carrier C1 of the first planetary gear set 14 which is connected to the carrier C2 are coupled (fixed) to the stationary member in the form of the housing 26, so that the rotating speeds of the carriers C1 and C2 are held zero. In this EV-2 drive mode, the rotating direction of the sun gear S1 and the rotating direction of the ring gear R1 in the first planetary gear set 14 are opposite to each other, and the rotating direction of the sun gear S2 and the rotating direction of the ring gear R2 in the second planetary gear set 16 are opposite to each other, so that when the first electric motor MG1 and/or second electric motor MG2 is/are operated to generate a negative torque (acting in the negative direction), the ring gears R1 and R2 are rotated, that is, the output gear 30 is rotated in the positive direction by the generated negative torque. Namely, the hybrid vehicle provided with the drive system 10 can be driven in the forward or reverse direction by at least one of the first electric motor MG1 and second electric motor MG2.

In the EV-2 drive mode, at least one of the first electric motor MG1 and second electric motor MG2 may be operated as the electric generator. In this case, one or both of the first and second electric motors MG1 and MG2 may be operated to generate a vehicle drive force (torque), at an operating point assuring a relatively high degree of operating efficiency, and/or with a reduced degree of torque limitation due to heat generation. Further, at least one of the first and second electric motors MG1 and MG2 may be held in a free state, when the generation of an electric energy by a regenerative operation of the electric motors MG1 and MG2 is inhibited due to full charging of the battery. Namely, the EV-2 drive mode is an EV drive mode which may be established under various running conditions of the hybrid vehicle, or may be kept for a relatively long length of time. Accordingly, the EV-2 drive mode is advantageously provided on a hybrid vehicle such as a plug-in hybrid vehicle, which is frequently placed in an EV drive mode.

The HV-1 drive mode indicated in Fig. 3 corresponds to a first engine drive mode of the drive system 10, which is preferably a hybrid drive mode in which the engine 12 is used as the vehicle drive power source while the first electric motor MG1 and second electric motor MG2 are operated as needed to generate a vehicle drive force and/or an electric energy. Fig. 4 is the collinear chart corresponding to the HV-1 drive mode. Described by reference to this collinear chart, the carrier C1 of the first planetary gear set 14 and the carrier C2 of the second planetary gear set 16 are rotatable relative to each other, in the released state of the clutch CL. In the engaged state of the brake BK, the carrier C2 of the second planetary gear set 16 is coupled (fixed) to the stationary member in the form of the housing 26, so that the rotating speed of the carrier C2 is held zero. In this HV-1 drive mode, the engine 12 is operated to generate an output torque by which the output gear 30 is rotated. At this time, the first electric motor MG1 is operated to generate a reaction torque in the first planetary gear set 14, so that the output of the engine 12 can be transmitted to the output gear 30. In the second planetary gear set 16, the rotating direction of the sun gear S2 and the rotating direction of the ring gear R2 are opposite to each other, in the engaged state of the brake BK, so that when the second electric motor MG2 is operated to generate a negative torque (acting in the negative direction), the ring gears R1 and R2 are rotated, that is, the output gear 30 is rotated in the positive direction by the generated negative torque.

The HV-2 drive mode indicated in Fig. 3 corresponds to a second engine drive mode of the drive system 10, which is preferably a hybrid drive mode in which the engine 12 is used as the vehicle drive power source while the first electric motor MG1 and second electric motor MG2 are operated as needed to generate a vehicle drive force and/or an electric energy. Fig. 6 is the collinear chart corresponding to the drive mode 4. Described by reference to this collinear chart, the carrier C1 of the first planetary gear set 14 and the carrier C2 of the second planetary gear set 16 are not rotatable relative to each other, in the engaged state of the clutch CL, that is, the carriers C1 and C2 are integrally rotated as a single rotary element. The ring gears R1 and R2, which are fixed to each other, are integrally rotated as a single rotary element. Namely, in the HV-2 drive mode of the drive system 10, the first planetary gear set 14 and second planetary gear set 16 function as a differential mechanism having a total of four rotary elements. That is, the HV-2 drive mode is a composite split mode in which the four rotary elements consisting of the sun gear S1

(connected to the first electric motor MG1), the sun gear S2 (connected to the second electric motor MG2), the rotary element constituted by the carriers C1 and C2 connected to each other (and to the engine 12), and the rotary element constituted by the ring gears R1 and R2 fixed to each other (and connected to the output gear 30) are connected to each other in the order of description in the rightward direction as seen in Fig. 6.

In the HV-2 drive mode, the rotary elements of the first planetary gear set 14 and second planetary gear set 16 are preferably arranged as indicated in the collinear chart of Fig. 6, that is, in the order of the sun gear S1 represented by the vertical line Y1, the sun gear S2 represented by the vertical line Y2, the carriers C1 and C2 represented by the vertical line Y3 (Y3'), and the ring gears R1 and R2 represented by the vertical line Y4 (Y4'). The gear ratios ρ1 and p2 of the first and second planetary gear sets 14 and 16 are determined such that the vertical line Y1 corresponding to the sun gear S1 and the vertical line Y2 corresponding to the sun gear S2 are positioned as indicated in the collinear chart of Fig. 6, namely, such that the distance between the vertical lines Y1 and Y3 is longer than the distance between the vertical lines Y2 and Y3'. In other words, the distance between the vertical lines corresponding to the sun gear S1 and the carrier C1 and the distance between the vertical lines corresponding to the sun gear S2 and the carrier C2 correspond to "1", while the distance between the vertical lines corresponding to the carrier C1 and the ring gear R1 and the distance between the vertical lines corresponding to the carrier C2 and the ring gear R2 correspond to the respective gear ratios ρ1 and p2. Accordingly, the drive system 10 is configured such that the gear ratio p2 of the second planetary gear set 16 is higher than the gear ratio ρ1 of the first planetary gear set 14.

In the HV-2 drive mode, the carrier C1 of the first planetary gear set 14 and the carrier C2 of the second planetary gear set 16 are connected to each other in the engaged state of the clutch CL, so that the carriers C1 and C2 are rotated integrally with each other. Accordingly, either one or both of the first electric motor MG1 and second electric motor MG2 can receive a reaction force corresponding to the output of the engine 12. Namely, one or both of the first and second electric motors MG1 and MG2 can be operated to receive the reaction force during an operation of the engine 12, in other words, the amounts of work to be assigned to the first and second electric motors MG1 and MG2 can be adjusted with respect to each other. That is, in the HV-2 drive mode, each of the first and second electric motors MG1 and MG2 can be operated at an operating point assuring a relatively high degree of operating efficiency, and/or with a reduced degree of torque limitation due to heat generation.

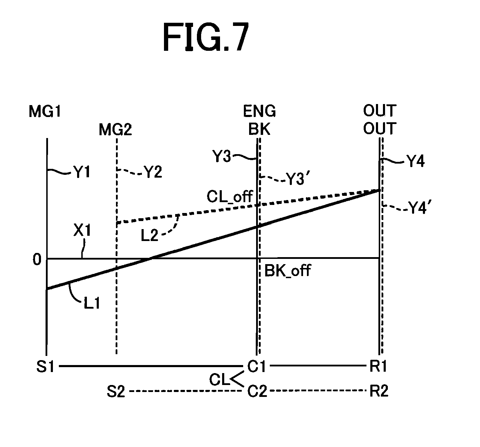

The HV-3 drive mode indicated in Fig. 3 corresponds to a third engine drive mode of the drive system 10, which is preferably a hybrid drive mode in which the engine 12 is operated as the vehicle drive power source while the first electric motor MG1 is operated to generate an electric energy, with a continuous change of the speed ratio, and with an operating point of the engine 12 being moved along a predetermined optimum operating curve. In this HV-3 drive mode, the engine 12 and first electric motor MG1 may be operated to generate a vehicle drive force, with the second electric motor MG2 being disconnected from a drive system. Fig. 7 is the collinear chart corresponding to this HV-3 drive mode. Described by reference to this collinear chart, the carrier C1 of the first planetary gear set 14 and the carrier C2 of the second planetary gear set 16 are rotatable relative to each other in the released state of the clutch CL. In the released state of the brake BK, the carrier C2 of the second planetary gear set 16 is rotatable relative to the stationary member in the form of the housing 26. In this arrangement, the second electric motor MG2 can be held at rest while it is disconnected from the drive system (power transmitting path).

In the HV-1 drive mode in which the brake BK is placed in the engaged state, the second electric motor MG2 is kept in an operated state together with a rotary motion of the output gear 30 (ring gear R2) during running of the vehicle. In this operating state, the operating speed of the second electric motor MG2 may reach an upper limit value (upper limit) during running of the vehicle at a comparatively high speed, or a rotary motion of the ring gear R2 at a high speed is transmitted to the sun gear S2. In this respect, it is not necessarily desirable to keep the second electric motor MG2 in the operated state during running of the vehicle at a comparatively high speed, from the standpoint of the operating efficiency. In the HV-3 drive mode, on the other hand, the engine 12 and the first electric motor MG1 may be operated to generate the vehicle drive force during running of the vehicle at the comparatively high speed, while the second electric motor MG2 is disconnected from the drive system, so that it is possible to reduce a power loss due to dragging of the unnecessarily operated second electric motor MG2, and to eliminate a limitation of the highest vehicle running speed corresponding to the permissible highest operating speed (upper limit of the operating speed) of the second electric motor MG2.

It will be understood from the foregoing description, the drive system 10 is selectively placed in one of the three hybrid drive modes in which the engine 12 is operated as the vehicle drive power source while the first and second electric motors MG1 and MG2 are operated as needed to generate a vehicle drive force and/or an electric energy, namely, in one of the HV-1 drive mode, HV-2 drive mode and HV-3 drive mode, which are selectively established by respective combinations of the engaged and released states of the clutch CL and brake BK. Accordingly, a transmission efficiency can be improved to improve the fuel economy of the vehicle, by selectively establishing one of the three hybrid drive modes according to the vehicle running speed and the speed ratio, in which the transmission efficiency is the highest.

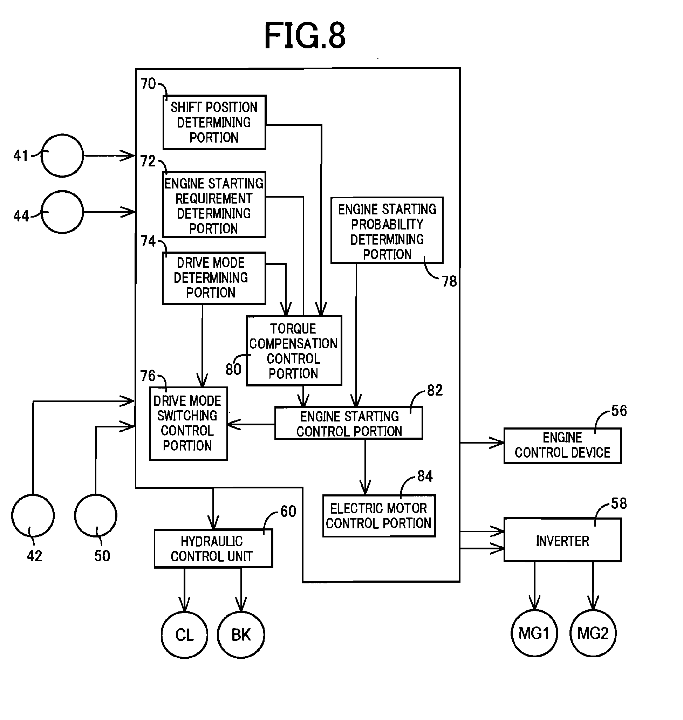

Fig. 8 is the functional block diagram for explaining major control functions of the electronic control device 40 depicted in Fig. 2. A shift position determining portion 70 shown in Fig. 8 is configured to determine the presently selected shift position of the manually operated shifting device 41, on the basis of the shift position signal Sh received from the manually operated shifting device 41. An engine starting requirement determining portion 72 is configured to determine whether the engine 12 is required to be started, as a result of an increase of an operator's required vehicle output to a value larger than a predetermined value, or a decrease of the electric energy amount SOC stored in the electric-energy storage device not shown, to a value smaller than a predetermined lower limit, or when the engine 12 is required to be warmed up or lubricated. The operator's required vehicle output is represented by the accelerator pedal operation amount A_{CC} and the vehicle running speed V corresponding to the rotating speed N_{OUT} of the output gear 30. A mode determining portion 74 is configured to determine a presently established one of the five modes consisting of the EV-1 drive mode, EV-2 drive mode, HV-1 drive mode, HV-2 drive mode and HV-3 drive mode, on the basis of vehicle parameters such as the required vehicle drive force, the vehicle running speed V, the accelerator pedal operation amount A_{CC}, the stored electric energy amount SOC and operating temperatures, or on the basis of output states of the engine control device 56 and the inverter 58, an output state of a mode switching control portion 76, or an already set state of an appropriate memory flag.

The mode switching control portion 76 is configured to implement a mode switching control for placing the drive system 10 in one of the drive modes which is selected by the mode determining portion 74. For instance, the mode switching control portion 76 determines whether the drive system 10 should be placed in an electric drive mode or a hybrid drive mode, depending upon whether the operator's required vehicle drive force represented by the vehicle running speed V and the accelerator pedal operation amount A_{CC} lies in a predetermined electric drive region or an engine drive region, or on the basis of a requirement based on the stored electric energy amount SOC. If the electric drive mode is selected, the mode switching control portion 76 establishes one of the EV-1 drive mode and EV-2 drive mode, on the basis of the requirement based on the stored electric energy amount SOC and the operator's selection. If the hybrid drive mode is selected, the mode switching control portion 76 establishes one of the HV-1 drive mode, HV-2 drive mode and HV-3 drive mode, on the basis of an operating efficiency of the engine 12, the transmission efficiency, the required vehicle drive force, etc., so as to provide a good compromise between the vehicle drivability and the fuel economy. For example, the mode switching control portion 76 establishes the HV-1 drive mode at a relatively low running speed in a relatively low-gear (high speed-reduction ratio) range, the HV-2 drive mode at a relatively intermediate running speed in a relatively intermediate-gear (intermediate speed-reduction ratio) range, the HV-3 drive mode at a relatively high running speed in a relatively high-gear (low speed-reduction ratio) range. Where the drive mode is switched from the motor drive mode EV-2 in which the first and second electric motors MG1 and MG2 are operated as the vehicle drive power source while the clutch CL and the brake BK are placed in the engaged state, to the engine drive mode HV-1, for example, this mode switching control portion 76 releases the clutch CL through the hydraulic control unit 60, to permit the first electric motor MG1 to start the engine 12, while the brake BK is held in the engaged state. Namely, the mode switching control portion 76 switches the operating state from the state shown in the collinear chart of Fig. 5 to the state shown in the collinear chart of Fig. 4.

An engine starting probability determining portion 78 is configured to determine whether there is a probability of a requirement for starting the engine 12, or not. For example, the engine starting probability determining portion 78 determines that there is not a probability of the requirement for starting the engine 12, where the hybrid vehicle is running in a steady state without an operation of the vehicle operator for rapid acceleration or abrupt braking of the vehicle, where the electric-energy storage device not shown is in an almost fully charged state with its stored electric energy amount SOC being close to a predetermined upper limit, or where cooling water and oil temperatures of the engine 12 are higher than predetermined warm-up limit values.

A torque compensation control portion 80 is configured to initiate a torque compensation control prior to a moment of initiation of an engine starting control by an engine starting control portion 82, when the following determinations have been made: the determination by the shift position determining portion 70 that the presently selected shift position of the manually operated shifting device is a "D" position; the determination by the engine starting requirement determining portion 72 that the engine 12 is required to be started; and the determination by the mode determining portion 74 that the hybrid vehicle is running in the EV-2 drive mode (second motor drive mode) in which the first and second electric motors MG1 and MG2 are operated as the vehicle drive power source. The torque compensation control portion 80 continues the torque compensation control until the engine starting control is terminated. In the torque compensation control, the torque compensation control portion 80 commands an electric motor control portion 84 to control the first electric motor MG1, which has been functioning in the EV-2 motor drive mode as the vehicle drive power source together with the second electric motor MG2, such that the output torque of the first electric motor MG1 is decreased toward zero, and to control the second electric motor MG2 to increase its output torque, so that a decrease of a vehicle drive torque caused by a decrease of the output torque of the first electric motor MG1 is compensated for by an increase of the vehicle drive torque caused by an increase of the output torque of the second electric motor MG2, whereby the total vehicle drive torque is held constant.

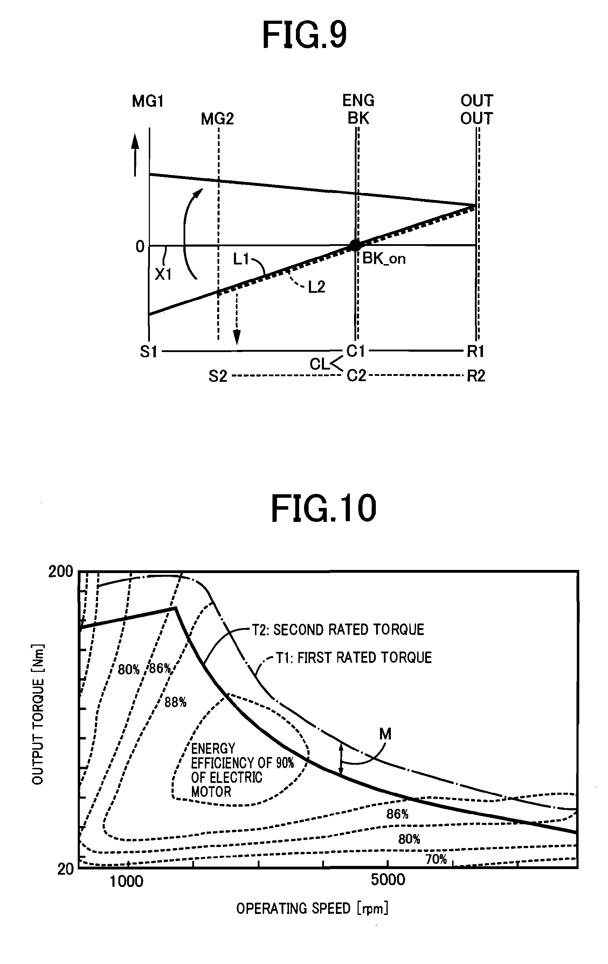

When the torque of the first electric motor MG1 has been decreased to zero by the above-described torque compensation control, the engine starting control portion 82 brings the clutch CL, which has been placed in the engaged state together with the brake BK, into the released state, for permitting the first electric motor MG1 to raise the speed of a rotary motion of the engine 12, as indicated in Fig. 9. In the process of rise of the speed of the engine 12, the engine starting control portion 82 generates fuel injection and ignition commands to cause the engine 12 to be operated by itself. Up to this moment, the torque compensation control is implemented by the torque compensation control portion 80, to mitigate or prevent a drive torque drop, namely, a temporary decrease of the drive torque of the hybrid vehicle upon starting of the engine 12 during running of the hybrid vehicle in the EV-2 motor drive mode. Since the engine 12 is thus started with the brake BK being kept in the engaged state, running of the hybrid vehicle with the engine in the HV-1 hybrid drive mode is initiated.

In the motor drive mode, for instance, in the EV-2 drive mode, each of the first and second electric motors MG1 and MG2 is operated at an operating point lying on a line of a second rated torque T2 which is predetermined as a continuous operation torque that is smaller by a predetermined margin value M than a first rated torque T1 which is predetermined to be relatively large as a short-time operation torque, as indicated in Fig. 10. During the engine starting, however, the engine starting control portion 82 controls the second electric motor MG2 so as to be temporarily operated at an operating point in a region in which the output torque is larger than the second rated torque T2, for example, at the operating point lying on the line of the first rated torque T1 or located close to this line, in order to prevent the drive torque drop with a higher degree of stability during starting of the engine 12, which drive torque drop would take place in spite of a rapid rise of the engine speed by the output torque of the first electric motor MG1 which is increased upon starting of the engine 12.

Further, in the motor drive mode, for instance, in the EV-2 drive mode (second motor drive mode), each of the first and second electric motors MG1 and MG2 is operated at an operating point within a region of relatively high energy efficiency in which the operator's required vehicle output can be satisfied. For example, the second electric motor MG2 is operated in an operating point within a 90% energy-efficiency region indicated in Fig. 10. However, the engine starting control portion 82 controls the second electric motor MG2 so as to be temporarily operated at an operating point in a region which is outside the region of high energy efficiency and in which the output torque is larger than the second rated torque T2, for example, at the operating point lying on the line of the first rated torque T1 or located close to this line, in order to prevent the drive torque drop with a higher degree of stability during starting of the engine 12, which drive torque drop would take place in spite of a rapid rise of the engine speed by the output torque of the first electric motor MG1 which is increased upon starting of the engine 12.

Where the engine starting probability determining portion 78 determines that there is a low probability of the requirement for the engine starting in the EV-2 drive mode, the engine starting control portion 82 controls the second electric motor MG2 so as to be operated at an operating point in a region in which the output torque is larger than the second rated torque T2 by the margin value M.

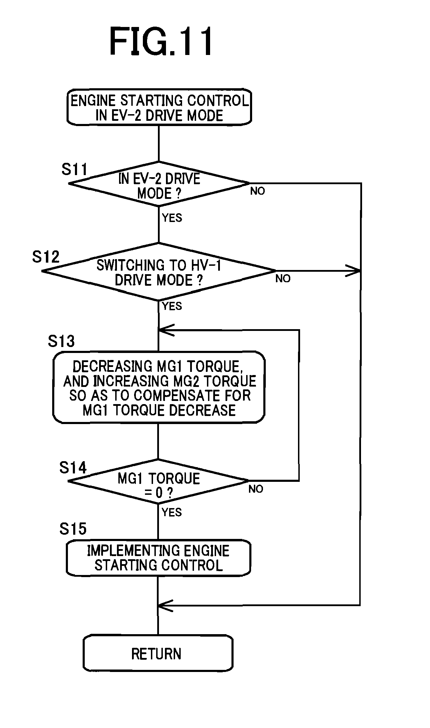

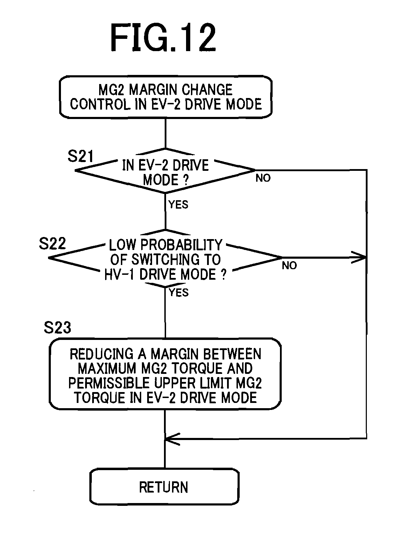

Figs. 11 and 12 are the flow charts for explaining a major portion of a reverse drive control operation implemented by the electronic control device 40 of Fig. 2. This control operation is repeatedly performed with a predetermined cycle time.

In Fig. 11, the control operation is initiated with step S11 ("step" being hereinafter omitted) corresponding to the mode switching control portion 76, to determine whether the hybrid vehicle is running in the EV-2 motor drive mode. If a negative determination is obtained in S11, the present routine is terminated. If an affirmative determination is obtained in S11, on the other hand, the control flow goes to S12 corresponding to the engine starting requirement determining portion 72, to determine whether the engine starting is required, that is, whether the vehicle drive mode is required to be switched from the EV-2 drive mode to the HV-1 engine drive mode. If a negative determination is obtained in S12, the present routine is terminated. If an affirmative determination is obtained in S12, on the other hand, the control flow goes to S13 corresponding to the engine starting control portion 82.

S13 is implemented to implement the torque compensation control, that is, to control the first electric motor MG1, which has been functioning in the EV-2 motor drive mode as the vehicle drive power source together with the second electric motor MG2, such that the output torque of the first electric motor MG1 is decreased toward zero, and to control the second electric motor MG2 to increase its output torque, so that the decrease of the vehicle drive torque caused by the decrease of the output torque of the first electric motor MG1 is compensated for by the increase of the vehicle drive torque caused by the increase of the output torque of the second electric motor MG2, whereby the total vehicle drive torque is held constant.

Then, the control flow goes to S14 to determine whether the output torque of the first electric motor MG1 has been zeroed. If a negative determination is obtained in S14, the control flow goes back to S13. If an affirmative determination is obtained in S14, on the other hand, the control flow goes to S15 corresponding to the engine starting control portion 82, to implement the engine starting control, namely, to bring the clutch CL into the released state, for permitting the first electric motor MG1 to raise the speed of the rotary motion of the engine 12, and to generate the fuel injection and ignition commands to start the engine 12. After the engine 12 has been operated by itself according to this engine starting control, the above-described torque compensation control and the engine starting control are terminated. When the engine 12 has been operated by itself as described above, running of the hybrid vehicle in the HV-1 engine drive mode with the brake BK being kept in the engaged state is initiated. According to this engine starting control wherein the second electric motor MG2 is operated for a comparatively short time, the second electric motor MG2 is operated at an operating point in a region which is outside the region of high energy efficiency indicated in Fig. 10 and in which the output torque is larger than the second rated torque T2, so that the output torque of the second electric motor MG2 is larger than when the hybrid vehicle is running in a steady state.

Referring next to Fig. 12, S21 is implemented to determine whether the hybrid vehicle is running in the EV-2 motor drive mode. If a negative determination is obtained in S21, the present routine is terminated. If an affirmative determination is obtained in S21, on the other hand, the control flow goes to S22 corresponding to the engine starting probability determining portion 78, to determine whether there is a low probability of a requirement for the engine starting, that is, whether there is a low probability of switching from the EV-2 drive mode to the HV-1 drive mode. If a negative determination is obtained in S22, the present routine is terminated. If an affirmative determination is obtained in S22, on the other hand, the control flow goes to S23 corresponding to the engine starting control portion 82, to permit the second electric motor MG2 to be operated at a region in which the output torque is larger than the second rated torque T2 that is a permissible maximum torque value in the motor drive mode, and to reduce, smaller than the above-indicated margin value M preferably, to zero between the first rated torque T1 and the second rated torque T2.

The drive control device 10 for the hybrid vehicle according to the present embodiment described above is provided with: the first planetary gear set 14 (first differential mechanism) having the sun gear S1 (first rotary element) connected to the first electric motor MG1, the carrier C1 (second rotary element) connected to the engine 12, and the ring gear R1 (third rotary element) connected to the output gear 30 (output rotary member); the second planetary gear set 16 (second differential mechanism) which has the sun gear S2 (first rotary element) connected to the second electric motor MG2, the carrier C2 (second rotary element) and the ring gear R2 (third rotary element), and in which one of the second and third rotary elements is connected to the third rotary element of the first planetary gear set 14 (first differential mechanism); the clutch CL configured to selectively connect the carrier C1 (second rotary element) of the first planetary gear set 14 and one of the carrier C2 (second rotary element) and the ring gear R2 (third rotary element) of the second planetary gear set 16 which is not connected to the ring gear R2 (third rotary element) of the first planetary gear set 14; and the brake BK configured to selectively fix the above-indicated one of the carrier C2 (second rotary element) and the ring gear R2 (third rotary element) of the second planetary gear set 16 (second differential mechanism) which is not connected to the ring gear R2 (third rotary element) of the first planetary gear set 14, to the housing 26 (stationary member). The hybrid vehicle is placed in a selected one of motor drive modes consisting of the EV-1 drive mode (first motor drive mode) in which the second electric motor MG2 is primarily operated to drive the hybrid vehicle while the brake BK is placed in the engaged state, and the EV-2 drive mode (second motor drive mode) in which the first electric motor MG1 and the second electric motor MG2 are operated to drive the hybrid vehicle while the brake BK and the clutch CL are placed in the engaged state. The drive control device is characterized by controlling the second electric motor MG2 so as to increase its output torque, and bringing the clutch CL into the released state for permitting the first electric motor MG1 to cause a rotary motion of the engine 12, upon starting of the engine 12 during running of the hybrid vehicle in the EV-2 drive mode (second motor drive mode). Accordingly, a decrease of the vehicle drive torque corresponding to a portion of an output torque of the first electric motor MG1, which portion has been used to drive the hybrid vehicle, is compensated for by an increase of the vehicle drive torque caused by an increase of the output torque of the second electric motor MG2, so that an amount of change of the vehicle drive torque is reduced to prevent the drive torque drop.

The drive control device 10 for the hybrid vehicle according to the present embodiment is further configured such that the second electric motor MG2 is operated in the EV-2 drive mode (second motor drive mode), at an operating point lying on the line of the second rated torque T2 which is smaller by the predetermined margin value M than the first rated torque T1 which is predetermined to be relatively large, and operated during the engine starting, at an operating point at which the output torque of the second electric motor MG2 is larger than the second rated torque T2. Accordingly, the hybrid vehicle can be run in the EV-2 drive mode (second motor drive mode) in a steady state without overheating, and the second electric motor MG2 can be temporarily operated during the engine starting, so as to generate a torque larger than the second rated torque T2 that is a permissible maximum torque value in the motor drive mode, so that the drive torque drop during the engine starting is prevented with a higher degree of stability.

The drive control device 10 for the hybrid vehicle according to the present embodiment is also configured such that each of the first and second electric motors MG1 and MG2 is operated in the EV-2 drive mode (second motor drive mode), at an operating point, which satisfies the operator's required vehicle output, in a region of relatively high efficiency, and operated during the engine starting, at an operating point which is outside the region of high efficiency and at which the output torque is larger than the second rated torque T2. Accordingly, the hybrid vehicle can be run in the EV-2 drive mode (second motor drive mode) with a high degree of operating efficiency of the electric motor, and the second electric motor MG2 can be temporarily operated during the starting of the engine, so as to generate a torque larger than the second rated torque T2 that is the permissible maximum torque value in the motor drive mode, so that the drive torque drop during the engine starting is prevented with a higher degree of stability.

The drive control device 10 for the hybrid vehicle according to the present embodiment is further configured such that the second electric motor MG2 is operated in the EV-2 drive mode (second motor drive mode), at an operating point at which the output torque of the second electric motor MG2 is larger than the second rated torque T2, where there is a low probability of a requirement for the engine starting. Accordingly, the second electric motor MG2 is operated at the operating point at which the output torque is larger than the second rated torque, so that a further increased vehicle drive force can be obtained in the EV-2 drive mode (second motor drive mode), where the probability of the requirement for the engine starting is low, as in the case where the hybrid vehicle is running in a steady state without an operation of the vehicle operator for rapid acceleration or abrupt braking of the vehicle, where the cooling water and oil temperatures of the engine are higher than the predetermined warm-up limit values, or where the electric-energy storage device is in an almost fully charged state with its stored electric energy amount SOC being close to the predetermined upper limit.

Other preferred embodiments of the present invention will be described in detail by reference to the drawings. In the following description, the same reference signs will be used to identify the same elements in the different embodiments, which will not be described redundantly.

### SECOND EMBODIMENT

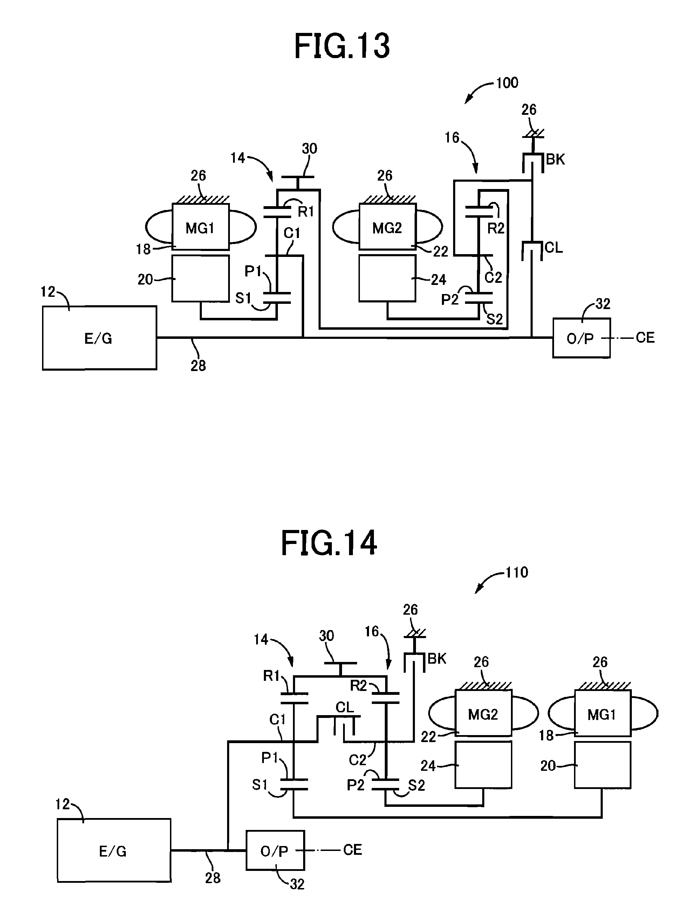

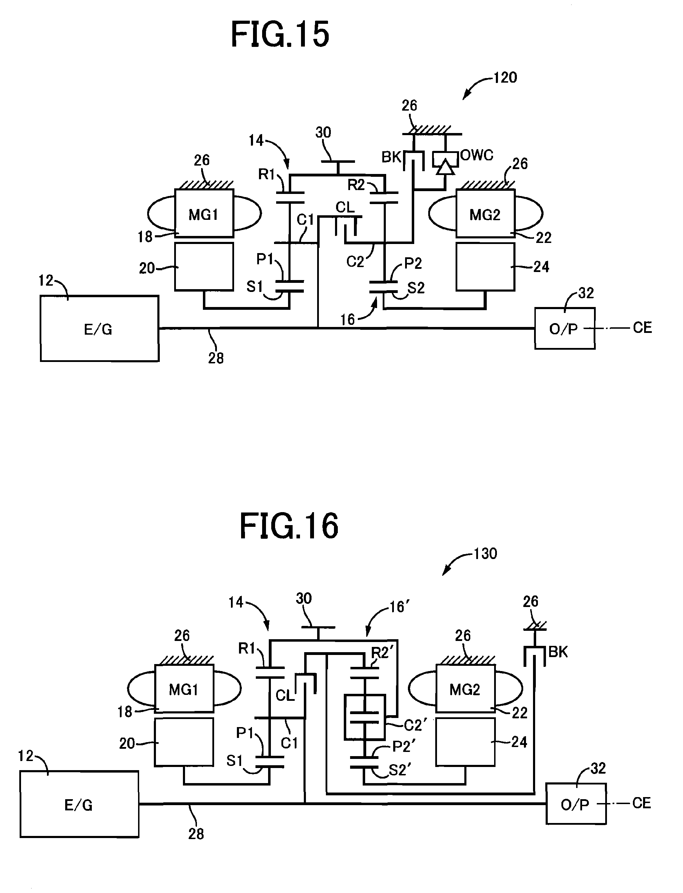

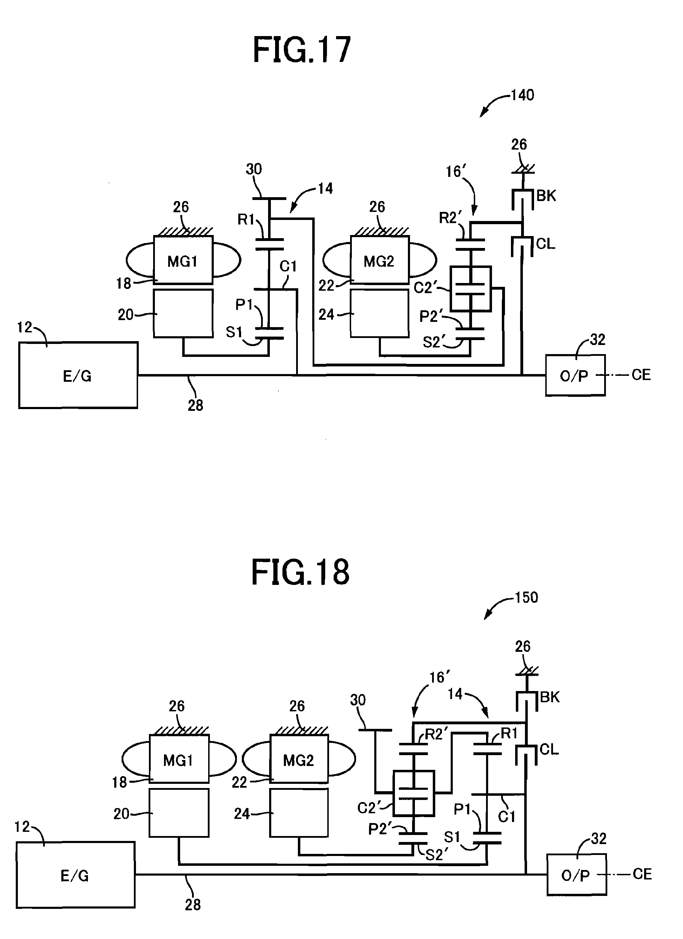

Figs. 13-18 are the schematic views for explaining arrangements of respective hybrid vehicle drive systems 100, 110, 120, 130, 140, 150 and 160 according to other preferred modes of this invention used instead of the hybrid vehicle drive system 10 in the first embodiment. The hybrid vehicle drive control device of the present invention is also applicable to drive systems such as the drive system 100 shown in Fig. 13 and the drive system 110 shown in Fig. 14, which have respective different arrangements of the first electric motor MG1, first planetary gear set 14, second electric motor MG2, second planetary gear set 16, clutch CL and brake BK in the direction of the center axis CE. The present hybrid vehicle drive control device is also applicable to drive systems such as the drive system 120 shown in Fig. 15, which have a one-way clutch OWC disposed between the carrier C2 of the second planetary gear set 16 and the stationary member in the form of the housing 26, in parallel with the brake BK, such that the one-way clutch OWC permits a rotary motion of the carrier C2 relative to the housing 26 in one of opposite directions and inhibits a rotary motion of the carrier C2 in the other direction. The present hybrid vehicle drive control device is further applicable to drive systems such as the drive system 130 shown in Fig. 16, the drive system 140 shown in Fig. 17 and the drive system 150 shown in Fig. 18, which are provided with a second differential mechanism in the form of a second planetary gear set 16' of a double-pinion type, in place of the second planetary gear set 16 of a single-pinion type. This second planetary gear set 16' is provided with rotary elements (elements) consisting of: a first rotary element in the form of a sun gear S2'; a second rotary element in the form of a carrier C2' supporting a plurality of pinion gears P2' meshing with each other such that each pinion gear P2' is rotatable about its axis and the axis of the planetary gear set; and a third rotary element in the form of a ring gear R2' meshing with the sun gear S2' through the pinion gears P2'.

Each of the hybrid vehicle drive systems 100, 110, 120, 130, 140 and 150 according to the present second embodiment is provided with: a first differential mechanism in the form of the first planetary gear set 14 having a first rotary element in the form of the sun gear S1 connected to the first electric motor MG1, a second rotary element in the form of the carrier C1 connected to the engine 12, and a third rotary element in the form of the ring gear R1 connected to an output rotary member in the form of the output gear 30; a second differential mechanism in the form of the second planetary gear set 16 (16') which has a first rotary element in the form of the sun gear S2 (S2') connected to the second electric motor MG2, a second rotary element in the form of the carrier C2 (C2') and a third rotary element in the form of the ring gear R2 (R2'), and in which one of the carrier C2 (C2') and the ring gear R2 (R2') is connected to the ring gear R1 of the first planetary gear set 14; the clutch CL for selectively connecting the carrier C1 of the first planetary gear set 14 and the other of the carrier C2 (C2') and the ring gear R2 (R2') which is not connected to the ring gear R1, to each other; and the brake BK for selectively fixing the other of the carrier C2 (C2') and the ring gear R2 (R2') which is not connected to the ring gear R1, to a stationary member in the form of the housing 26. Accordingly, the electronic control device 40 applied to the present second embodiment has the same advantages as the first embodiment described above.

### THIRD EMBODIMENT

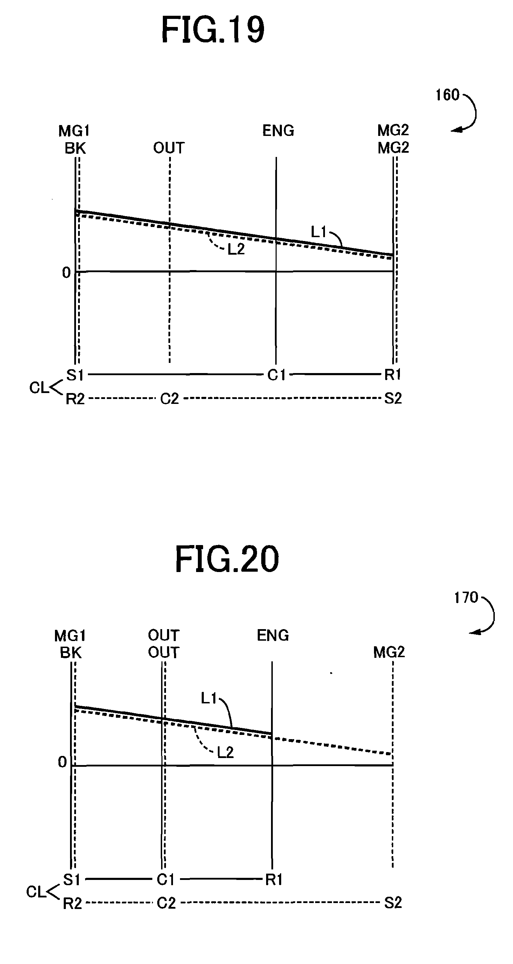

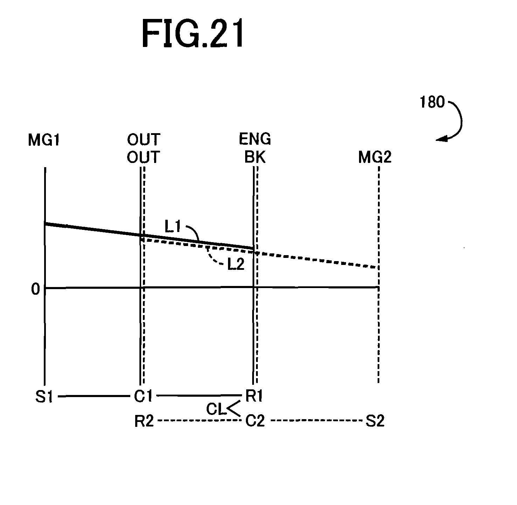

Figs. 19-21 are the collinear charts for explaining arrangements and operations of respective hybrid vehicle drive systems 160, 170 and 180 according to other preferred modes of this invention in place of the drive system 10 of the embodiment 1. In Figs. 19-21, the relative rotating speeds of the sun gear S1, carrier C1 and ring gear R1 of the first planetary gear set 14 are represented by the solid line L1, while the relative rotating speeds of the sun gear S2, carrier C2 and ring gear R2 of the second planetary gear set 16 are represented by the broken line L2, as described above. In the hybrid vehicle drive system 160, the sun gear S1, carrier C1 and ring gear R1 of the first planetary gear set 14 are respectively connected to the first electric motor MG1, engine 12 and second electric motor MG2, while the sun gear S2, carrier C2 and ring gear R2 of the second planetary gear set 16 are respectively connected to the second electric motor MG2 and output rotary member 30, and to the stationary member 26 through the brake BK. The sun gear S1 and the ring gear R2 are selectively connected to each other through the clutch CL. In the hybrid vehicle drive system 170, the sun gear S1, carrier C1 and ring gear R1 of the first planetary gear set 14 are respectively connected to the first electric motor MG1, output rotary member 30 and engine 12, while the sun gear S2, carrier C2 and ring gear R2 of the second planetary gear set 16 are respectively connected to the second electric motor MG2 and output rotary member 30, and to the stationary member 26 through the brake BK. The sun gear S1 and the ring gear R2 are selectively connected to each other through the clutch CL. In the hybrid vehicle drive system 180, the sun gear S1, carrier C1 and ring gear R1 of the first planetary gear set 14 are respectively connected to the first electric motor MG1, output rotary member 30 and engine 12, while the sun gear S2, carrier C2 and ring gear R2 of the second planetary gear set 16 are respectively connected to the second electric motor MG2, to the stationary member 26 through the brake BK, and to the output rotary member 30. The ring gear R1 and the carrier C2 are selectively connected to each other through the clutch CL.

The hybrid vehicle drive systems shown in Figs. 19-21 are identical with the embodiment shown in Fig. 9 in that upon starting of the engine 12 during running of the hybrid vehicle in the motor drive mode (EV-2) with the first and second electric motors MG1 and MG2, the output torque of the second electric motor MG2 is increased, and the engine 12 is started by the first electric motor MG1 in the released state of the clutch CL. Accordingly, a decrease of the vehicle drive torque corresponding to a portion of an output torque of the first electric motor MG1, which portion has been used to drive the hybrid vehicle, is compensated for by an increase of the vehicle drive torque caused by an increase of the output torque of the second electric motor MG2, so that an amount of change of the vehicle drive torque is reduced to prevent the drive torque drop.

The hybrid vehicle drive systems shown in Figs. 9, 13-18 and 19-21 are identical with each other in that each of these hybrid vehicle drive systems is provided with: the first differential mechanism (first planetary gear set 14) and the second differential mechanism (second planetary gear set 16, 16'), which have four rotary elements as a whole whose relative rotating speeds are represented in the collinear chart; the first electric motor MG1, second electric motor MG2, engine 12 and output rotary member (output gear 30) which are connected to the respective four rotary elements; and the brake BK configured to selectively fix the rotary element connected to the engine 12, to the stationary member. In these hybrid vehicle drive systems, one of the four rotary elements is constituted by the rotary element of the first differential mechanism (first planetary gear set 14) and the rotary element of the second differential mechanism (second planetary gear set 16, 16') which are selectively connected to each other through the clutch CL. The hybrid vehicle has the motor drive mode in which the first electric motor MG1 and the second electric motor MG2 are operated to drive the hybrid vehicle while the brake BK and the clutch CL are placed in the engaged state.

While the preferred embodiments of this invention have been described by reference to the drawings, it is to be understood that the invention is not limited to the details of the illustrated embodiments, but may be embodied with various changes which may occur without departing from the spirit of the invention.

### NOMENCLATURE OF REFERENCE SIGNS

10, 100, 110, 120, 130, 140, 150, 160, 170, 180: Hybrid vehicle drive system
12: Engine 14: First planetary gear set (First differential mechanism)
16, 16': Second planetary gear set (Second differential mechanism)
18, 22: Stator 20, 24: Rotor 26: Housing (Stationary member)
28: Input shaft 30: Output gear (Output rotary member)
40: Electronic control device (Drive control device)
72: Engine starting requirement determining portion
74: Mode determining portion
78: Engine starting probability determining portion
80: Torque compensation control portion
82: Engine starting control portion
BK: Brake CL: Clutch C1, C2, C2': Carrier (Second rotary element)
MG1: First electric motor MG2: Second electric motor
R1, R2, R2': Ring gear (Third rotary element)
S1, S2, S2': Sun gear (First rotary element)

## Claims

1. A drive control device for a hybrid vehicle provided with: a first differential mechanism and a second differential mechanism which have four rotary elements as a whole; an engine, a first electric motor, a second electric motor and an output rotary member which are respectively connected to said four rotary elements; and a brake configured to selectively fix the rotary element connected to said engine, to a stationary member, and wherein one of the said four rotary elements is constituted by the rotary element of said first differential mechanism and the rotary element of said second differential mechanism which are selectively connected to each other through a clutch, the hybrid vehicle having a motor drive mode in which the first electric motor and the second electric motor are operated to drive the hybrid vehicle while said brake and said clutch are placed in an engaged state, the drive control device being **characterized by**:
bringing said clutch into a released state for permitting said first electric motor to cause a rotary motion of said engine, upon starting of said engine during running of the hybrid vehicle in said motor drive mode, and controlling said second electric motor such that an output torque of the second electric motor is larger than in said second motor drive mode.

2. The drive control device according to claim 1, wherein said second electric motor is operated in said motor drive mode, at an operating point within a second rated torque which is smaller by a predetermined margin value than a first rated torque which is predetermined to be relatively large, and operated during the starting of said engine, at an operating point at which the output torque of the second electric motor is larger than said second rated torque.

3. The drive control device according to claim 1 or 2, wherein each of said first and second electric motors is operated in said motor drive mode, at an operating point in a region of relatively high efficiency, and operated during the starting of said engine, at an operating point which is outside said region of relatively high efficiency and at which the output torque is larger than said second rated torque.

4. The drive control device according to any one of claims 1-3, wherein said second electric motor is operated in said motor drive mode, at an operating point at which the output torque of the second electric motor is larger than a second rated torque, where there is a low probability of a requirement for starting said engine.

5. The drive control device according to any one of claims 1-4, wherein said first differential mechanism has a first rotary element connected to said first electric motor, a second rotary element connected to said engine, and a third rotary element connected to said output rotary member, while said second differential mechanism has a first rotary element connected to the second electric motor, a second rotary element, and a third rotary element, one of said second and third rotary elements being connected to the third rotary element of said first differential mechanism,
and wherein said clutch is configured to selectively connect the rotary element of said first differential mechanism and the rotary element of said second differential mechanism to each other, while said brake is configured to selectively fix the rotary element of said second differential mechanism to the stationary member.
